# EUROPEAN PATENT APPLICATION

(11) **EP 4 827 078 A1**
(43) Date of publication of application: **21.10.2026**
(21) Application number: 26170366.4
(22) Date of filing: 02.04.2026
(51) Int. Cl.: H04N 1/405, H04N 1/409

(54) **IMAGE PROCESSING METHOD, IMAGE PROCESSING APPARATUS, AND PROGRAM**

(30) Priority: 14.04.2025 JP 2025066272
(71) Applicant: Konica Minolta, Inc., Tokyo 100-7015 (JP)
(72) Inventor: TORIYAMA, Hideyuki, Tokyo, 100-7015 (JP)
(74) Representative: Gille Hrabal Partnerschaftsgesellschaft mbB Patentanwälte

(57) **Abstract**

An image processing method includes applying an error diffusion method to M-valued input image data to output N-valued output image data, with N < M. When a value of a pixel of interest in the input image data is greater than zero and less than a predetermined value, the method further includes determining a value of a corresponding pixel of interest corresponding to the pixel of interest in the output image data to be a value other than zero based on a value of a surrounding pixel around the corresponding pixel of interest in a first range.

## Description

### CROSS-REFERENCE TO RELATED APPLICATION

The entire disclosure of Japanese Patent Application No. 2025-066272, filed on April 14, 2025, is incorporated herein by reference in its entirety.

### BACKGROUND OF THE INVENTION

### TECHNICAL FIELD

The present disclosure relates to an image processing method, an image processing apparatus, and a program.

### DESCRIPTION OF RELATED ART

Conventionally, in printers, copiers, and the like, a technique is used in which error diffusion processing is performed on multi-valued input image data, such as photographic images, to reproduce a halftone representation of the input image data while reducing the value of the input image data. However, error diffusion processing has a problem in that thin lines (in particular, low-density lines) contained in the input image data are prone to break. In response, Japanese Unexamined Patent Application Publication No. 2000-287086 discloses a technique that adds noise to the input image data or to a value reduction threshold value to facilitate the generation of ON pixels that represent lines. Further, Japanese Patent No. 6175914 discloses a technique that performs dithering before error diffusion processing to control a value reduction threshold value, thereby facilitating the generation of ON pixels.

### SUMMARY OF THE INVENTION

However, the above-described conventional techniques have a problem in that the graininess of the output image data deteriorates after value reduction.

An object of the present disclosure is to make it less likely for thin lines to break in error diffusion processing while suppressing the deterioration of graininess.

To achieve at least one of the above-mentioned objects, the invention recited in claim 1 is an image processing method comprises applying an error diffusion method to M-valued input image data to output N-valued output image data, with N < M, wherein, when a value of a pixel of interest in the input image data is greater than zero and less than a predetermined value, the method further comprises determining a value of a corresponding pixel of interest corresponding to the pixel of interest in the output image data to be a value other than zero based on a value of a surrounding pixel around the corresponding pixel of interest in a first range.

The invention recited in claim 2 is the image processing method according to claim 1, wherein, when a number of a pixel having a value other than zero among the surrounding pixel in the first range is less than or equal to a predetermined first threshold value, the determining includes determining the value of the corresponding pixel of interest to be the value other than zero.

The invention recited in claim 3 is the image processing method according to claim 2, wherein, when a number of a pixel having a value other than zero among a surrounding pixel around the corresponding pixel of interest in a second range in the output image data is greater than or equal to a second threshold value that is greater than the first threshold value, the method further includes determining the value of the corresponding pixel of interest to be zero.

To achieve at least one of the above-mentioned objects, the invention recited in claim 4 is an image processing method comprising applying an error diffusion method to M-valued input image data to output N-valued output image data, with N < M, wherein, when a value of a pixel of interest in the input image data is less than a maximum value and is greater than or equal to a predetermined value, the method further comprises determining a value of a corresponding pixel of interest corresponding to the pixel of interest in the output image data to be zero based on a value of a surrounding pixel around the corresponding pixel of interest in a first range.

The invention recited in claim 5 is the image processing method according to claim 4, wherein, when a number of a pixel having a value of zero among the surrounding pixel in the first range is less than or equal to a predetermined first threshold value, the determining includes determining the value of the corresponding pixel of interest to be zero.

The invention recited in claim 6 is the image processing method according to claim 5, wherein, when a number of a pixel having a value of zero among a surrounding pixel around the corresponding pixel of interest in a second range in the output image data is greater than or equal to a second threshold value that is greater than the first threshold value, the method further includes determining the value of the corresponding pixel of interest to be a value other than zero.

To achieve at least one of the above-mentioned objects, the invention recited in claim 7 is an image processing method comprising applying an error diffusion method to M-valued input image data to output N-valued output image data, with N < M, wherein the method further comprises executing one of: first processing of determining, based on a value of a pixel of interest in the input image data and a value of a surrounding pixel around a corresponding pixel of interest in a first range in the output image data, a value of the corresponding pixel of interest corresponding to the pixel of interest in the output image data; second processing of determining the value of the corresponding pixel of interest based on the value of the pixel of interest in the input image data and a value of a surrounding pixel around the corresponding pixel of interest in a second range in the output image data; and third processing of maintaining the value of the corresponding pixel of interest without executing the first processing or the second processing.

The invention recited in claim 8 is the image processing method according to claim 7, wherein, when the value of the pixel of interest in the input image data is greater than zero and less than a predetermined value: the first processing includes determining the value of the corresponding pixel of interest to be a value other than zero when a number of a pixel having a value other than zero among the surrounding pixel in the first range is less than or equal to a predetermined first threshold value; and the second processing includes determining the value of the corresponding pixel of interest to be zero when a number of a pixel having a value other than zero among the surrounding pixel in the second range is greater than or equal to a second threshold value that is greater than the first threshold value.

The invention recited in claim 9 is the image processing method according to claim 7, wherein, when the value of the pixel of interest in the input image data is less than a maximum value and greater than or equal to a predetermined value: the first processing includes determining the value of the corresponding pixel of interest to be zero when a number of a pixel having a value of zero among the surrounding pixel in the first range is less than or equal to a predetermined first threshold value; and the second processing includes determining the value of the corresponding pixel of interest to be a value other than zero when a number of a pixel having a value of zero among the surrounding pixel in the second range is greater than or equal to a second threshold value that is greater than the first threshold value.

To achieve at least one of the above-mentioned objects, the invention recited in claim 10 is an image processing method comprising applying an error diffusion method to M-valued input image data to output N-valued output image data, with N < M, wherein the method further comprises executing one of: first processing of determining, based on a value of a pixel of interest in the input image data and a value of a surrounding pixel around a corresponding pixel of interest in a predetermined range in the output image data, a value of the corresponding pixel of interest corresponding to the pixel of interest in the output image data; second processing of determining the value of the corresponding pixel of interest based on the value of the pixel of interest and the value of the surrounding pixel in the predetermined range; and third processing of maintaining the value of the corresponding pixel of interest without executing the first processing or the second processing.

The invention recited in claim 11 is the image processing method according to claim 10, wherein, when the value of the pixel of interest in the input image data is greater than zero and less than a predetermined value: the first processing includes determining the value of the corresponding pixel of interest to be a value other than zero when a number of a pixel having a value other than zero among the surrounding pixel in the predetermined range is less than or equal to a predetermined first threshold value; and the second processing includes determining the value of the corresponding pixel of interest to be zero when the number of the pixel having the value other than zero among the surrounding pixel in the predetermined range is greater than or equal to a second threshold value that is greater than the first threshold value.

To achieve at least one of the above-mentioned objects, the invention recited in claim 12 is an image processing apparatus comprising a controller, wherein the controller: applies an error diffusion method to M-valued input image data to output N-valued output image data, with N < M; and, when a value of a pixel of interest in the input image data is greater than zero and less than a predetermined value, determines a value of a corresponding pixel of interest corresponding to the pixel of interest in the output image data to be a value other than zero based on a value of a surrounding pixel around the corresponding pixel of interest in a first range.

To achieve at least one of the above-mentioned objects, the invention recited in claim 13 is an image processing apparatus comprising a controller, wherein the controller: applies an error diffusion method to M-valued input image data to output N-valued output image data, with N < M; and, when a value of a pixel of interest in the input image data is less than a maximum value and is greater than or equal to a predetermined value, determines a value of a corresponding pixel of interest corresponding to the pixel of interest in the output image data to be zero based on a value of a surrounding pixel around the corresponding pixel of interest in a first range.

To achieve at least one of the above-mentioned objects, the invention recited in claim 14 is a program causing a computer to execute: a process of applying an error diffusion method to M-valued input image data to output N-valued output image data, with N < M; and, when a value of a pixel of interest in the input image data is greater than zero and less than a predetermined value, a process of determining a value of a corresponding pixel of interest corresponding to the pixel of interest in the output image data to be a value other than zero based on a value of a surrounding pixel around the corresponding pixel of interest in a first range.

To achieve at least one of the above-mentioned objects, the invention recited in claim 15 is a program causing a computer to execute: a process of applying an error diffusion method to M-valued input image data to output N-valued output image data, with N < M; and, when a value of a pixel of interest in the input image data is less than a maximum value and is greater than or equal to a predetermined value, a process of determining a value of a corresponding pixel of interest corresponding to the pixel of interest in the output image data to be zero based on a value of a surrounding pixel around the corresponding pixel of interest in a first range.

According to the present disclosure, in error diffusion processing, it is possible to make it less likely for thin lines to break while suppressing the deterioration of graininess.

### BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, wherein:
FIG. 1 is a block diagram illustrating a configuration of an image processing apparatus;
FIG. 2 is a functional block diagram of an error diffusion processing section;
FIG. 3 is a diagram illustrating an example of a method for distributing errors in error diffusion processing;
FIG. 4 is a diagram illustrating a target region in which a first range and a second range are determined;
FIG. 5 is a diagram illustrating a lookup table used to determine the second range in forced OFF processing;
FIG. 6 is a diagram illustrating a lookup table used to determine the first range in forced ON processing;
FIG. 7 is a diagram illustrating a lookup table for determining a filter number;
FIG. 8 is a diagram illustrating, in error diffusion processing that reduces 1024 values to three values, pixel ratios of the three values in the processed data;
FIG. 9 is a flowchart illustrating a control procedure for dot arrangement monitoring processing;
FIG. 10 is a diagram illustrating the contents of forced change processing;
FIG. 11 is a diagram illustrating an effect of the forced ON processing;
FIG. 12 is a diagram illustrating a lookup table used to determine a second threshold value in forced OFF processing according to a second embodiment;
FIG. 13 is a diagram illustrating a lookup table used to determine a first threshold value in forced ON processing according to the second embodiment;
FIG. 14 is a diagram illustrating a lookup table for determining a filter number according to the second embodiment;
FIG. 15 is a functional block diagram of an error diffusion processing section according to the second embodiment; and
FIG. 16 is a flowchart illustrating a control procedure for dot arrangement monitoring processing according to the second embodiment.

### DETAILED DESCRIPTION

Hereinafter, one or more embodiments of the present invention will be described with reference to the drawings. However, the scope of the invention is not limited to the disclosed embodiments.

### (First Embodiment)

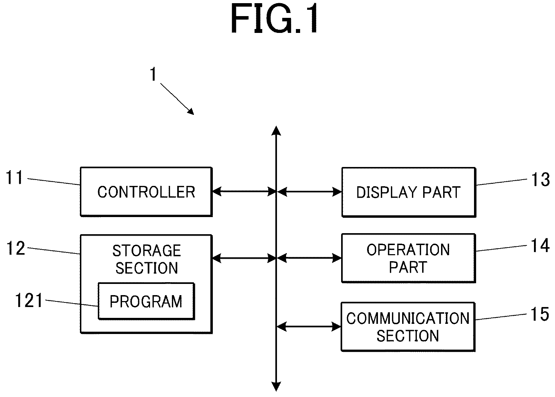

FIG. 1 is a block diagram illustrating a configuration of an image processing apparatus 1 according to an embodiment of the present disclosure. The image processing apparatus 1 applies an error diffusion method to M-valued input image data to output N-valued output image data, with N < M. In the present embodiment, 1024-gradation image data in which each pixel value is any one of "0" to "1023" will be described as an example of the M-valued input image data. Furthermore, in the present embodiment, 3-gradation image data in which each pixel value is any one of "0", "1", and "2" will be described as an example of the N-valued output image data. The M values are not limited to 1024 values and may be any M consecutive integer values having 0 as a minimum value. The N values are not limited to three values and may be any N consecutive integer values having 0 as a minimum value. For example, the N-valued output image data may be two-gradation image data in which each pixel value is "0" or "1".

The image processing apparatus 1 may be incorporated in, for example, a printer, a copier, an image reading apparatus, a multifunction peripheral, or a personal computer. In this case, these apparatuses output an image to a recording medium, a display part, or the like, based on the N-valued output image data generated by the image processing apparatus 1 by performing error diffusion processing. In the present embodiment, the image processing apparatus 1 is incorporated in an inkjet printer or is communicatively connected to an inkjet printer. The image processing apparatus 1 transmits the generated N-valued output image data to the inkjet printer. The inkjet printer does not eject ink at positions corresponding to pixels having a value of "0" in the output image data and ejects small ink droplets and large ink droplets at positions corresponding to pixels having values of "1" and "2", respectively.

As illustrated in FIG. 1, the image processing apparatus 1 includes a controller 11, a storage section 12, a display part 13, an operation part 14, and a communication section 15. The components of the image processing apparatus 1 are connected to each other via a data transmission path such as a bus.

The controller 11 includes a central processing unit (CPU), a random-access memory (RAM), and the like. The controller 11 is a processor that controls the operation of each component of the image processing apparatus 1 by executing various processes in accordance with a program 121 stored in the storage section 12.

The storage section 12 includes a nonvolatile semiconductor memory, a hard disk, and the like. The storage section 12 stores the program 121 to be executed by the controller 11, input image data, output image data, and various setting data to be referenced during execution of the program 121.

The display part 13 includes a display device such as a liquid crystal display. The display part 13 displays various types of information in accordance with a control signal and image data input from the controller 11. The operation part 14 includes input means such as a touch screen, operation buttons, a mouse, and a keyboard. When an operation is performed on the input means, the operation part 14 outputs an operation signal corresponding to the operation to the controller 11. When the image processing apparatus 1 is incorporated into another apparatus such as a printer, the display part 13 and/or the operation part 14 may be omitted. The communication section 15 performs a communication operation according to a predetermined communication standard. Through this communication operation, the communication section 15 transmits and receives data to and from an external device. For example, the communication section 15 receives, from a terminal device serving as an external device, image data related to an image to be printed. Also, for example, the communication section 15 transmits generated N-valued output image data to a printer or the like as an external device.

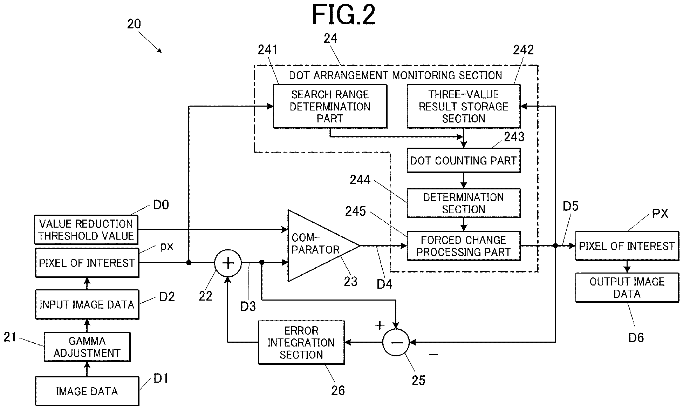

FIG. 2 is a functional block diagram of an error diffusion processing section 20 including the controller 11 and the storage section 12. The error diffusion processing performed by the error diffusion processing section 20 of the image processing apparatus 1 will be described below with reference to FIG. 2. The error diffusion processing section 20 includes a gamma adjuster 21, an adder 22, a comparator 23, a dot arrangement monitoring section 24, a subtractor 25, and an error integration section 26. In other words, by executing the program 121, the controller 11 functions as the gamma adjuster 21, the adder 22, the comparator 23, the dot arrangement monitoring section 24, the subtractor 25, and the error integration section 26. Known error diffusion processing is performed by the adder 22, the comparator 23, the subtractor 25, and the error integration section 26. A feature of the present disclosure resides in the dot arrangement monitoring section 24. The dot arrangement monitoring section 24 forcibly changes the result of error diffusion processing depending on whether predetermined conditions are satisfied. With this change, breaks in thin low-density lines can be reduced while suppressing the deterioration of graininess in output image data D6. The dot arrangement monitoring section 24 includes a search range determination part 241, a three-value result storage section 242, a dot counting part 243, a determination section 244, and a forced change processing part 245.

The gamma adjuster 21 performs gamma adjustment on image data D1 acquired from an external device or the like. The image data D1 of the present embodiment has 256 gradations (8-bit), where a pixel value "0" corresponds to white and a pixel value "255" corresponds to black. The gamma adjuster 21 performs gamma adjustment on the image data D1 to generate input image data D2 having 1024 gradations (10-bit). The gamma adjustment is performed by, for example, passing the image data D1 through a predetermined conversion table. Through gamma adjustment, the density of the input image data D2 is adjusted to maintain linearity with the density of the output image (such as printed material).

After the gamma adjustment, error diffusion processing on one pixel of interest px in the input image data D2 determines the value of a pixel of interest PX (a corresponding pixel of interest) in the output image data D6 that corresponds to the pixel of interest px. Thereafter, this process is performed for each pixel of interest px in the input image data D2, thereby generating the N-valued output image data D6 from the M-valued input image data D2.

The adder 22 adds an error output from the error integration section 26 to the value of one pixel of interest px in the input image data D2. The adder 22 outputs, to the comparator 23, the post-addition pixel value D3 obtained by adding the error to the value of the pixel of interest px. The comparator 23 compares the post-addition pixel value D3 with a value reduction threshold value D0 and outputs N-valued comparison result data D4. In the present embodiment, two values, 1023 × 0.5 and 1023 × 1.5, are prepared for the value reduction threshold value D0. When the post-addition pixel value D3 is less than 1023 × 0.5, the comparator 23 outputs "0" as the comparison result data D4. When the post-addition pixel value D3 is greater than or equal to 1023 × 0.5 and less than 1023 × 1.5, the comparator 23 outputs "1" as the comparison result data D4. When the post-addition pixel value D3 is 1023 × 1.5 or greater, the comparator 23 outputs "2" as the comparison result data D4. "0" in the comparison result data D4 corresponds to non-ejection of ink, that is, white. "1" in the comparison result data D4 corresponds to ejection of small ink droplets. "2" in the comparison result data D4 corresponds to ejection of large ink droplets.

The comparison result data D4 is input to the dot arrangement monitoring section 24. The dot arrangement monitoring section 24 executes either forced ON processing (first processing) or forced OFF processing (second processing) that changes the comparison result data D4, or maintaining processing (third processing) that maintains the comparison result data D4 without changing it. Then, the dot arrangement monitoring section 24 outputs error diffusion output D5. Details of the forced ON processing and the forced OFF processing will be described later. The output from the dot arrangement monitoring section 24 is the result of the error diffusion processing, that is, the pixel value of the pixel of interest PX. The output image data D6 is generated from the pixel values of a plurality of pixels of interest PX. The error diffusion output D5 is output to and stored in the three-value result storage section 242. The three-value result storage section 242 may store the error diffusion output D5 as a binary state of "0" and "1 or 2". For example, the three-value result storage section 242 may store "0" when the error diffusion output D5 is "0" and may store "1" when the error diffusion output D5 is "1" or "2".

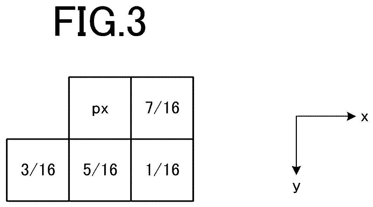

The subtractor 25 subtracts the value obtained by multiplying the error diffusion output D5 by 1023 from the post-addition pixel value D3. This subtraction result is the error generated when the value reduction is performed (reduced to three values in the present embodiment). The subtraction result is output to the error integration section 26. The error integration section 26 distributes the input error to pixels around the pixel of interest px. The distribution method is not particularly limited; for example, distribution may be performed using the Floyd-Steinberg type illustrated in FIG. 3. In the example of FIG. 3, 7/16 of the error is distributed to the pixel immediately to the right of the pixel of interest px, 3/16 to the pixel at the lower left, 5/16 to the pixel directly below, and 1/16 to the pixel at the lower right. Here, in FIG. 3, the rightward direction is defined as the x-direction, and the downward direction is defined as the y-direction. The error diffusion processing is performed in the following order: starting from the origin at the upper-left corner, the pixel of interest px is selected in the +x direction; after processing of the rightmost pixel is completed, the pixel of interest px at the left end of the adjacent pixel row in the +y direction is selected. When the surrounding pixels are selected as the pixel of interest px, the adder 22 adds the distributed error to the pixel value of the pixel of interest px.

Next, the operation of the dot arrangement monitoring section 24 will be described. In the following, in the input image data D2, a region having a pixel value of 0 or more and less than 512 is referred to as a "highlight region", and a region having a pixel value of 512 or more and less than or equal to 1023 is referred to as a "shadow region". The pixel value "512" in the input image data D2 is one aspect of the "predetermined value".

When a pixel of interest px in the highlight region is selected, in the output image data D6, a pixel having a pixel value of "0" is referred to as an "OFF pixel", and a pixel having a pixel value of "1" or "2" is referred to as an "ON pixel". Processing of forcibly changing the comparison result data D4 to "1" and outputting "1" as the error diffusion output D5 is referred to as the "forced ON processing". Processing of forcibly changing the comparison result data D4 to "0" and outputting "0" as the error diffusion output D5 is referred to as the "forced OFF processing". The forced ON processing is processing of changing, for a low-density pixel of interest px in the highlight region, the value of the corresponding pixel of interest PX to a high-density "1" and corresponds to the first processing. The forced OFF processing is processing of changing, for a low-density pixel of interest px in the highlight region, the value of the corresponding pixel of interest PX to "0" corresponding to white and corresponds to the second processing. However, when the value of the pixel of interest px is the minimum value "0", the forced ON processing and the forced OFF processing may be omitted.

When a pixel of interest px in the shadow region is selected, in the output image data D6, a pixel having a pixel value of "1" or "2" is referred to as an "OFF pixel", and a pixel having a pixel value of "0" is referred to as an "ON pixel". Processing of forcibly changing the comparison result data D4 to "0" and outputting "0" as the error diffusion output D5 is referred to as the "forced ON processing". Processing of forcibly changing the comparison result data D4 to "1" and outputting "1" as the error diffusion output D5 is referred to as the "forced OFF processing". The forced ON processing is processing of changing, for a high-density pixel of interest px in the shadow region, the value of the corresponding pixel of interest PX to "0" corresponding to white and corresponds to the first processing. The forced OFF processing is processing of changing, for a high-density pixel of interest px in the shadow region, the value of the corresponding pixel of interest PX to a high-density "1" and corresponds to the second processing. However, when the value of the pixel of interest px is the maximum value "1023", the forced ON processing and the forced OFF processing may be omitted.

### <Forced OFF Processing in Highlight Region>

The forced OFF processing when a pixel of interest px in the highlight region is selected will be described. In the forced OFF processing in the highlight region, the dot arrangement monitoring section 24 determines the value of the error diffusion output D5 of the pixel of interest PX to be "0" based on the values (error diffusion output D5) of the surrounding pixels around the pixel of interest PX in a second range (search range). Specifically, in the forced OFF processing in the highlight region, the dot arrangement monitoring section 24 determines the value of the pixel of interest PX to be "0" when the number of ON pixels (pixels having a value of "1" or "2") among the surrounding pixels in the second range is greater than or equal to a predetermined second threshold value. In the first embodiment, the second threshold value is "1". In this case, when there is at least one ON pixel in the second range, the dot arrangement monitoring section 24 forcibly changes the error diffusion output D5 of the pixel of interest PX to "0". By the forced OFF processing, when the second range has a proper density or higher corresponding to the value of the pixel of interest px, it is possible to prevent the generation of unnecessary ON pixels. As a result, graininess in a solid portion of the input image data D2 is improved.

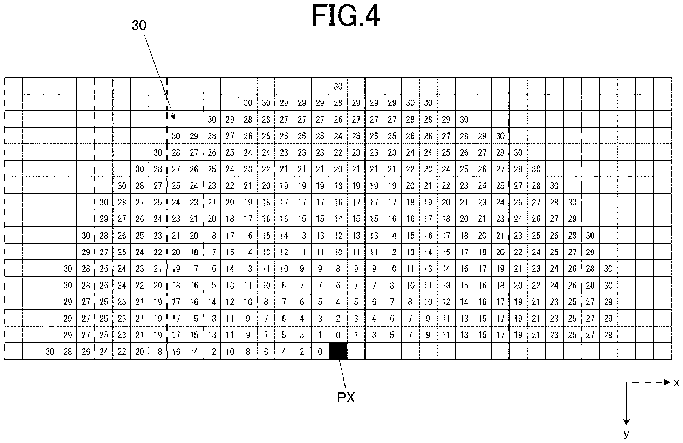

The error diffusion output D5 of the surrounding pixels around the pixel of interest PX is stored in the three-value result storage section 242. In the forced OFF processing and the forced ON processing, of the error diffusion output D5 stored in the three-value result storage section 242, the error diffusion output D5 of pixels within the target range 30 shown in FIG. 4 is referenced. The target range 30 is a range corresponding to a portion of the output image data D6 and has a circular shape centered on the pixel of interest PX. A circular shape in this specification includes a shape where the outer perimeter of a circle overlapping pixels arranged in a matrix is replaced with the sides of rectangular pixels that contact the outer periphery. However, since the error diffusion processing has not yet been performed on pixels located on the +x-direction side of the pixel of interest PX in the pixel row including the pixel of interest PX, and on pixels located on the +y-direction side of that pixel row, the error diffusion output D5 is not stored. Accordingly, the target range 30 may also be rephrased to have a semicircular shape centered on the pixel of interest PX. In the present embodiment, the radius of the target range 30 is 17 pixels. However, the radius of the target range 30 is not limited thereto. A filter number ranging from 0 to 30 is assigned to each pixel in the target range 30. In FIG. 4, pixels to which no filter number is assigned lie outside the target range 30. Filter numbers are defined as such that pixels farther from the pixel of interest PX have larger values. Note that the maximum value of filter numbers assigned to the respective pixels in the target range 30 is not limited to 30.

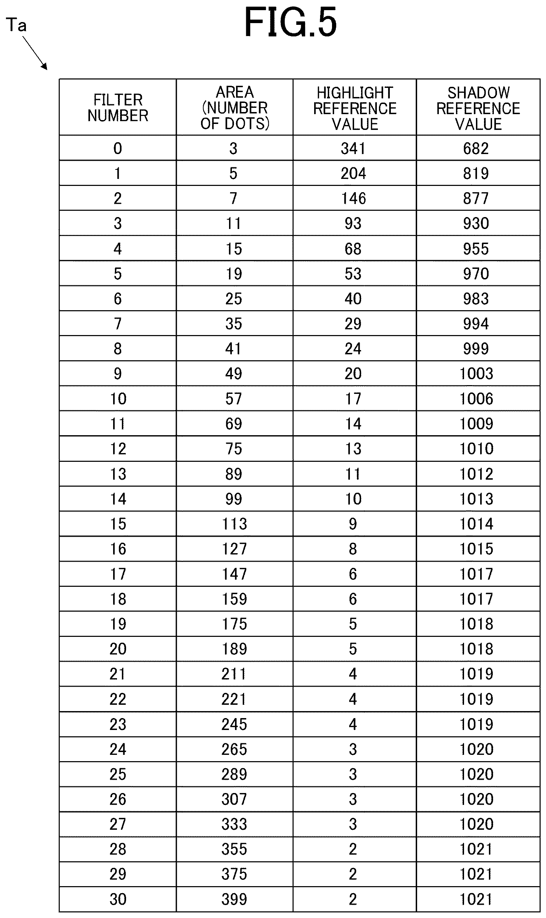

When the second threshold value is fixed to "1" as in the present embodiment, the dot arrangement monitoring section 24 determines, based on the value of the pixel of interest px, the second range for which ON pixels are counted in the target range 30. FIG. 5 illustrates a lookup table Ta used to determine the second range in the forced OFF processing. The "area (number of dots)" in the lookup table Ta represents the total number of pixels including pixels having filter numbers less than or equal to the "filter number" and the pixel of interest PX. For example, the "area (number of dots)" in the row where the "filter number" is "1" is "5". This is the sum of "4" (the number of pixels with filter numbers from 0 to 1) and "1" corresponding to the pixel of interest PX. The "highlight reference value" and the "shadow reference value" are obtained by normalizing the reciprocal of the number in the "area (number of dots)" column to values between 0 and 1023. In other words, the "highlight reference value" is the maximum value m such that 1/M ≥ m/1024, where M is the "area (number of dots)". For example, when only one pixel (20%) out of five pixels corresponding to filter number "1" is an ON pixel, the gradation value when those five pixels are regarded as one group is "20% × 1023 = 204" gradations. The "highlight reference value" is set to match this gradation value. Since the "shadow reference value" follows the inverse logic of the "highlight reference value", the "shadow reference value" is "1023 - highlight reference value".

When the forced OFF processing is performed on a pixel of interest px in the highlight region, an n is identified such that the pixel value of the pixel of interest px falls within the range of values greater than the highlight reference value for filter number "n+1" in the lookup table Ta and less than or equal to the highlight reference value for filter number "n". Then, the region in which filter numbers are less than or equal to n is determined as the second range. Therefore, selecting the filter number based on the value of the pixel of interest px corresponds to determining the size of the second range based on the value of the pixel of interest px. The size of the second range is represented by, for example, the radius of the second range. Note that the pixel of interest PX is excluded from the second range because the error diffusion output D5 is undetermined. When the number of ON pixels (pixels having a pixel value of "1" or "2") in the determined second range is "1" or greater (the second threshold value), the forced OFF processing is executed. For example, when the value of the pixel of interest px is "93", a filter number "3" is selected in accordance with the above-described rule. In addition, the region consisting of pixels having filter numbers from "0" to "3" is determined as the second range. When this second range contains one or more ON pixels, the overall gradation of the entire second range is already greater than or equal to the gradation value of the pixel of interest px. Therefore, if the error diffusion output D5 for the pixel of interest PX corresponding to the pixel of interest px is set to "1", the overall gradation of the entire second range would deviate further from the gradation value of the pixel of interest px. Therefore, the forced OFF processing is executed, and the error diffusion output D5 is changed to "0" regardless of the value of the comparison result data D4.

### <Forced OFF Processing in Shadow Region>

When the forced OFF processing is performed on a pixel of interest px in the shadow region, an n is identified such that the pixel value of the pixel of interest px falls within the range of values greater than or equal to the shadow reference value for filter number "n" in the lookup table Ta and less than the shadow reference value for filter number "n+1". Then, the region in which filter numbers are less than or equal to n is determined as the second range. Note that the pixel of interest PX is excluded from the second range because the error diffusion output D5 is undetermined. When the number of ON pixels (pixels having a pixel value of "0") in the determined second range is "1" or greater (the second threshold value), the forced OFF processing is executed. For example, when the value of the pixel of interest px is "930", a filter number "3" is selected in accordance with the above-described rule. In addition, the region consisting of pixels having filter numbers from "0" to "3" is selected as the second range. When this second range contains one or more ON pixels, the overall gradation of the entire second range is already less than or equal to the gradation value of the pixel of interest px. Therefore, if the error diffusion output D5 for the pixel of interest PX corresponding to the pixel of interest px is set to "0", the overall gradation of the entire second range would deviate further from the gradation value of the pixel of interest px. Therefore, the forced OFF processing is executed, and the error diffusion output D5 is changed to "1" regardless of the value of the comparison result data D4.

The lookup table Ta shown in FIG. 5 is an example. For example, to provide a margin, the "highlight reference value" may be set smaller than that in FIG. 5, and the "shadow reference value" may be set larger than that in FIG. 5. When a margin is provided, the degree of freedom in ON pixel arrangement increases. For filter numbers with smaller second ranges (such as 0 or 1), specific ON pixel arrangements (adjacent at 45 degrees, horizontally, or vertically) may persist, potentially causing texture artifacts. Providing a margin can suppress the occurrence of such texture artifacts.

### <Forced ON Processing in Highlight Region>

The forced ON processing when a pixel of interest px in the highlight region is selected will be described. In the forced ON processing in the highlight region, the dot arrangement monitoring section 24 determines the value of the error diffusion output D5 of the pixel of interest PX to be "1" based on the values (error diffusion output D5) of the surrounding pixels around the pixel of interest PX in a first range (search range). Here, "1" is one aspect of "a value other than 0". The first range is a region determined by a determination method different from that used to determine the second range and is typically different from the second range. In the forced ON processing in the highlight region, the dot arrangement monitoring section 24 determines the value of the pixel of interest PX to be "1" when the number of ON pixels (pixels having a value of "1" or "2") among the surrounding pixels in the first range is less than or equal to a predetermined first threshold value. The first threshold value is smaller than the second threshold value. In the first embodiment, the first threshold value is "0". In this case, when there is no ON pixel in the first range, the dot arrangement monitoring section 24 forcibly changes the error diffusion output D5 of the pixel of interest PX to "1". With this forced ON processing, in error diffusion processing on the input image data D2 containing thin lines, it is possible to suppress the occurrence of consecutive regions in which no ON pixels are formed, thereby making it less likely for lines to break.

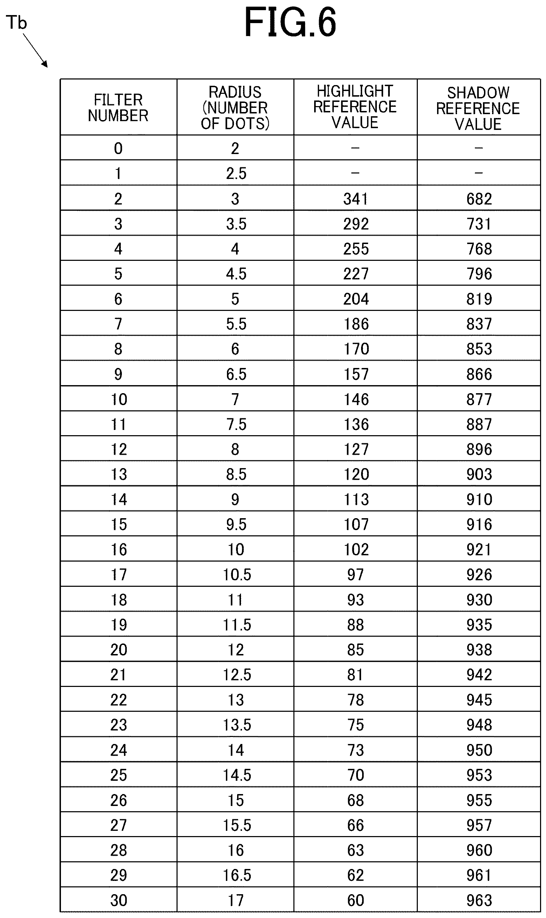

FIG. 6 is a diagram illustrating a lookup table Tb used to determine the first range in the forced ON processing. In the lookup table Tb, the "radius (number of dots)" represents the number of pixels in the radial direction of the substantially semicircular region consisting of pixels having filter numbers less than or equal to the "filter number" and the pixel of interest PX. For example, in the row where the "filter number" is "4", the "radius (number of dots)" is "4". This corresponds to the fact that the number of pixels in the radial direction of the substantially semicircular region consisting of pixels having filter numbers from 0 to 4 is "4". The "highlight reference value" and the "shadow reference value" are obtained by normalizing the reciprocal of the number in the "radius (number of dots)" column to values between 0 and 1023. In other words, the "highlight reference value" is the maximum value r such that 1/R ≥ r/1024, where R is the "radius (number of dots)". For example, when only one pixel (25%) out of four pixels in the radius of the semicircular region corresponding to the filter number "4" is an ON pixel, the gradation value when those four pixels are regarded as one group is "25% × 1023 = 255". The "highlight reference value" is set to match this gradation value. Since the "shadow reference value" follows the inverse logic of the "highlight reference value", the "shadow reference value" is "1023 - highlight reference value". The lookup table Tb is set on the premise that a line of one dot width (one pixel width) exists in the first range. When a line of one dot width extending in any direction exists in the first range, it is optimal for one ON pixel to be present somewhere in the first range. Therefore, the "highlight reference value" and "shadow reference value" are set as described above.

When the forced ON processing is performed on a pixel of interest px in the highlight region, an n is identified such that the pixel value of the pixel of interest px falls within the range of values greater than or equal to the highlight reference value for filter number "n" in the lookup table Tb and less than the highlight reference value for filter number "n-1". Then, the region in which filter numbers are less than or equal to n is determined as the first range. Therefore, selecting the filter number based on the value of the pixel of interest px corresponds to determining the size of the first range based on the value of the pixel of interest px. The size of the first range is represented by, for example, the radius of the first range. Note that the pixel of interest PX is excluded from the first range because the error diffusion output D5 is undetermined. When the number of ON pixels (pixels having a pixel value of "1" or "2") in the determined first range is less than or equal to "0" (the first threshold value), that is, "0", the forced ON processing is executed. For example, when the value of the pixel of interest px is "93", a filter number "18" is selected in accordance with the above-described rule. In addition, the region consisting of pixels having filter numbers from "0" to "18" is determined as the first range. When there is no ON pixel in the first range and the pixel of interest PX is an OFF pixel, breaks in thin lines may be visually recognized. Therefore, the forced ON processing is executed, and the error diffusion output D5 of the pixel of interest PX is changed to "1" regardless of the value of the comparison result data D4.

### <Forced ON Processing in Shadow Region>

When the forced ON processing is performed on a pixel of interest px in the shadow region, an n is identified such that the pixel value of the pixel of interest px falls within the range of values greater than the shadow reference value for filter number "n-1" in the lookup table Tb and less than or equal to the shadow reference value for filter number "n". Then, the region in which filter numbers are less than or equal to n is determined as the first range. Note that the pixel of interest PX is excluded from the first range because the error diffusion output D5 is undetermined. When the number of ON pixels (pixels having a pixel value of "0") in the determined first range is less than or equal to "0" (the first threshold value), that is, "0", the forced ON processing is executed. For example, when the value of the pixel of interest px is "930", a filter number "18" is selected in accordance with the above-described rule. In addition, the region consisting of pixels having filter numbers from "0" to "18" is determined as the first range. When there is no ON pixel in the first range and the pixel of interest PX is an OFF pixel (pixel value "1"), breaks in thin lines may be visually recognized. Therefore, the forced ON processing is executed, and the error diffusion output D5 of the pixel of interest PX is changed to "0" regardless of the value of the comparison result data D4.

The lookup table Tb shown in FIG. 6 is an example. For example, to provide a margin, the "highlight reference value" may be set larger than that in FIG. 6, and the "shadow reference value" may be set smaller than that in FIG. 6. This is because, when the theoretical values shown in FIG. 6 are used as-is, the number of ON pixels may become excessively large. This occurs because the forced ON processing forcibly sets pixels in a local region in which a line break has occurred to ON pixels and thus cannot thin out ON pixels in a local region in which no line break has occurred and the number of ON pixels is already large. Therefore, when the theoretical values are used as-is, the ON-pixel ratio tends to be slightly higher on a macroscopic scale.

The first range that serves as the search range in the forced ON processing is wider than the second range that serves as the search range in the forced OFF processing. Specifically, the first range becomes significantly wider when the value of the pixel of interest px is near the minimum value in the highlight region, or when the value of the pixel of interest px is near the maximum value in the shadow region. Therefore, the forced ON processing may be omitted when the value of the pixel of interest px is less than or equal to a predetermined lower-limit value in the highlight region, or when the value of the pixel of interest px is greater than or equal to a predetermined upper-limit value in the shadow region. In addition, the forced ON processing may be omitted in intermediate density regions in which line breaks are less likely to occur (e.g., density regions in which the value of the pixel of interest px is greater than or equal to 352 and less than or equal to 704).

For a given pixel of interest px, the following relationship exists between the second range used for the forced OFF processing and the first range used for the forced ON processing. That is, for a given pixel of interest px, the number of pixels contained in the second range is equal to the number of pixels corresponding to the radius of the first range. For example, when the value of the pixel of interest px is "93", filter number "3" in FIG. 5 is selected for the forced OFF processing, and filter number "18" in FIG. 6 is selected for the forced ON processing. The area of the second range determined by the filter number "3" is 11 pixels, and the radius of the first range determined by the filter number "18" is 11 pixels; these values are equal to each other.

The forced ON processing and the forced OFF processing do not conflict with each other and are compatible. For example, consider a case where the input image data D2 is a solid image having a certain gradation. In such a case, forced OFF processing is executed as appropriate in accordance with the gradation value of the solid image and the number of ON pixels in the second range. On the other hand, in a solid image, a situation where no ON pixels exist within the first range for the forced ON processing-which is typically wider than the second range-does not occur. Therefore, the forced ON processing is never executed. Thus, the forced ON processing and the forced OFF processing do not conflict with each other.

As another example, consider a case where the input image data D2 is a horizontal line image having a line width of one dot. In the case of an image having a small ratio of ON pixels as described above, a situation may occur in which not a single ON pixel exists even in the wide first range for the forced ON processing. Therefore, the forced ON processing is executed as appropriate in accordance with presence or absence of ON pixels in the first range. On the other hand, the probability that ON pixels exist in the second range, which is narrower than the first range, is extremely low. Therefore, normally, the forced OFF processing does not become effective. If ON pixels were to exist in the second range, the forced OFF processing would become effective. However, since ON pixels would also exist in the first range, the forced ON processing would not become effective in this case. Therefore, in any case, the forced ON processing and the forced OFF processing do not conflict with each other.

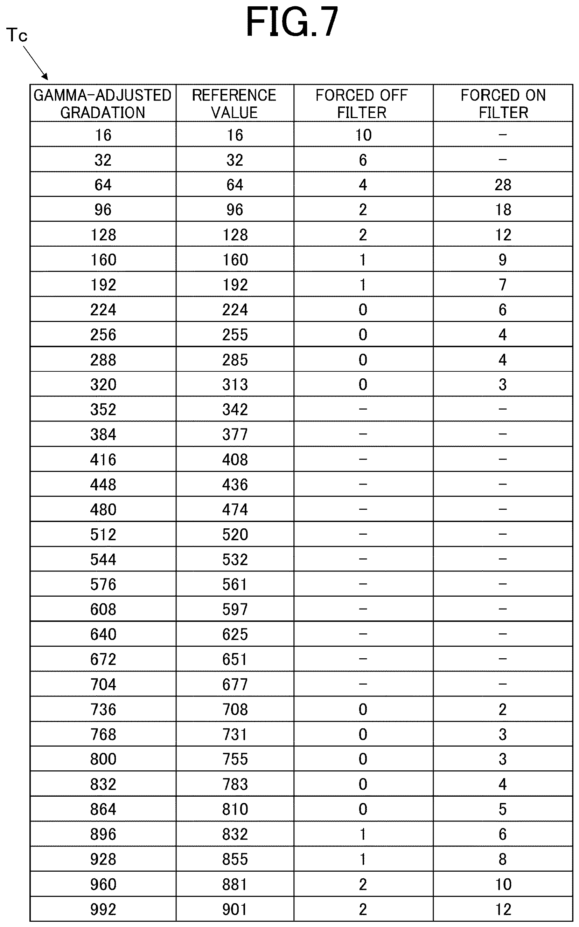

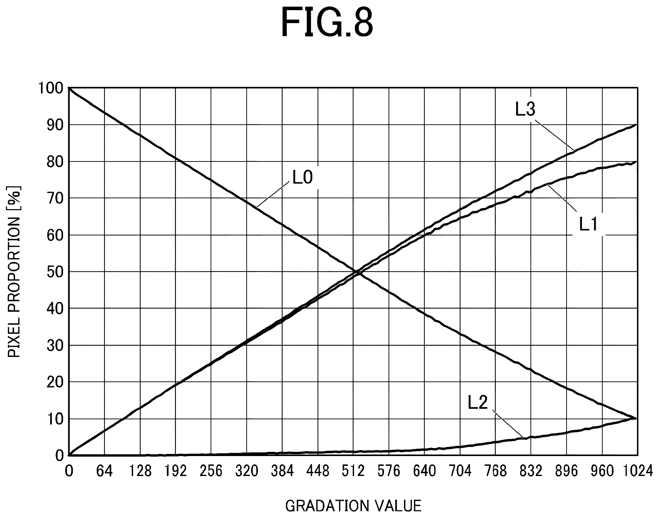

<Lookup Table Tc for Determining Filter Number> In the actual forced OFF processing and forced ON processing, a lookup table Tc shown in FIG. 7 is used instead of the lookup tables Ta and Tb shown in FIGS. 5 and 6. The lookup tables Ta to Tc are generated in advance and stored in the storage section 12. The lookup table Tc corresponds to a reorganized version of the lookup tables Ta and Tb shown in FIGS. 5 and 6 such that a filter number can be determined from the value of the pixel of interest px after gamma adjustment. The "reference value" corresponds to the "highlight reference value" or the "shadow reference value" shown in FIGS. 5 and 6. In FIG. 7, the "gamma-adjusted gradation" is shown in 16-gradation increments. However, in reality, intermediate data between these values also exists. The correspondence between the "gamma-adjusted gradation" and the "reference value" can be derived from the simulation results shown in FIG. 8.

FIG. 8 is a diagram illustrating, in error diffusion processing that reduces 1024 values to three values, pixel ratios (pixel proportions) of the three values in the processed data. The horizontal axis represents gradation values from 0 to 1023 in the gamma-adjusted input image data D2. The vertical axis represents the ratios of pixels with values "0", "1", and "2" occupying a predetermined area when error diffusion processing is performed on a solid image corresponding to the gradation values on the horizontal axis. Specifically, the line L0 represents the ratio of pixels with value "0". The line L1 represents the ratio of pixels with value "1". The line L2 represents the ratio of pixels with value "2". The line L3 represents the sum of the ratios of pixels "1" and pixels "2". In the example of FIG. 8, pixels "0" and pixels "1" occupy substantially all the area from the minimum gradation to the intermediate gradation. From the intermediate gradation to the maximum gradation, the increase rate of pixels "1" is slightly suppressed, and the proportion of pixels "2" increases. In the forced OFF processing and the forced ON processing, pixels "1" and pixels "2" are collectively counted. Therefore, the value of the line L3 corresponding to the respective gradation values on the horizontal axis becomes the "reference value" corresponding to the "gamma-adjusted gradation" in FIG. 7. However, since the vertical axis in FIG. 8 is in percentage, it is converted such that "100%" = "1023".

In FIG. 7, the correspondence between the "reference value" and a "forced OFF filter" is derived from the correspondence between the "highlight reference value" or "shadow reference value" and the "filter number" in the lookup table Ta of FIG. 5. Further, the correspondence between the "reference value" and a "forced ON filter" is derived from the correspondence between the "highlight reference value" or "shadow reference value" and the "filter number" in the lookup table Tb of FIG. 6. For gamma-adjusted gradations where the "forced OFF filter" is "-" in FIG. 7, the forced OFF processing is not executed. In addition, for gamma-adjusted gradations where the "forced ON filter" is "-", the forced ON processing is not executed. Forced ON processing is not executed for forced ON filters with gamma-adjusted gradations of 16 and 32, considering that the first range becomes extremely large and line breaks in such a faint image are less likely to be problematic. For gamma-adjusted gradations between 352 and 704, no processing is performed because these densities fall outside the range for the forced OFF processing and are unlikely to cause line breaks with the forced ON processing.

### <Operation of Dot Arrangement Monitoring Section>

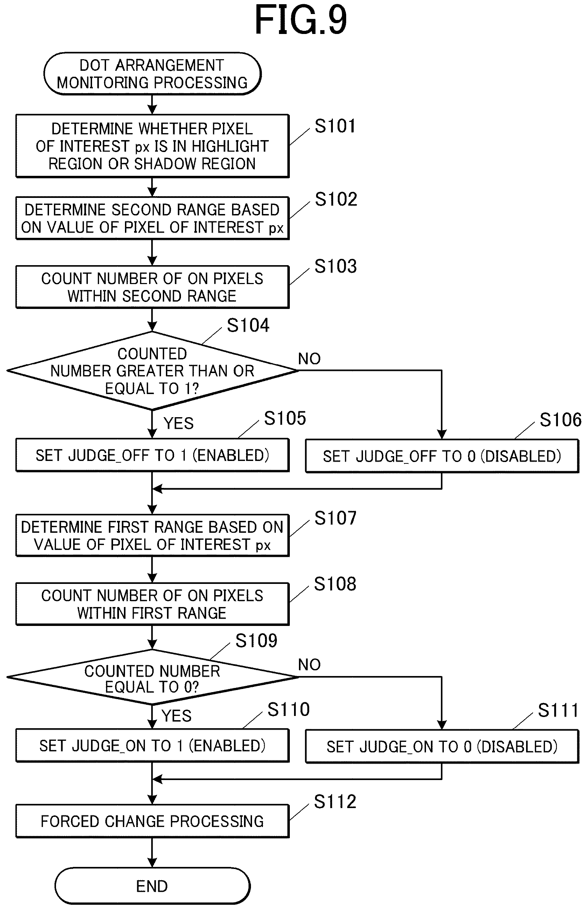

Dot arrangement monitoring processing for performing the above-described forced OFF processing and forced ON processing will be described with reference to the flowchart of FIG. 9 and the block diagram of FIG. 2. The dot arrangement monitoring processing is executed by the dot arrangement monitoring section 24. The dot arrangement monitoring processing is executed each time one pixel of interest px is selected. In the dot arrangement monitoring processing, steps S101 to S106 and S112 correspond to the forced OFF processing, and steps S107 to S112 correspond to the forced ON processing.

When the dot arrangement monitoring processing is started, as illustrated in FIG. 2, the value of a pixel of interest px is input to the search range determination part 241 of the dot arrangement monitoring section 24. The search range determination part 241 determines, based on the value of the pixel of interest px, whether the pixel of interest px is in the highlight region or the shadow region (step S101). When the value of the pixel of interest px is greater than or equal to 0 and less than 512, the search range determination part 241 determines that the pixel of interest px is in the highlight region. When the value is greater than or equal to 512 and less than or equal to 1023, the search range determination part 241 determines that the pixel of interest px is in the shadow region. The search range determination part 241 determines, based on the value of the pixel of interest px, the second range for the forced OFF processing (step S102). Here, in the lookup table Tc of FIG. 7, the search range determination part 241 identifies the "forced OFF filter" corresponding to the gamma-adjusted gradation of the pixel of interest px and determines the second range based on the identified filter number. The search range determination part 241 outputs the determined second range to the dot counting part 243 in FIG. 2. The dot counting part 243 counts the number of ON pixels within the second range in the error diffusion output D5 of the surrounding pixels stored in the three-value result storage section 242 (step S103). The dot counting part 243 outputs the count result to the determination section 244 in FIG. 2. The determination section 244 determines whether the count result is greater than or equal to "1" (the second threshold value) (step S104). If it is determined that the count result is greater than or equal to "1" ("YES" in step S104), the determination section 244 assigns "1" to the variable "JUDGE_OFF" associated with the determination result of the forced OFF processing, indicating that the forced OFF processing is enabled (step S105). If it is determined that the count result is less than "1" ("NO" in step S104), the determination section 244 assigns "0" to the variable "JUDGE_OFF", indicating that the forced OFF processing is disabled (step S106).

Upon completion of step S105 or S106, the search range determination part 241 determines, based on the value of the pixel of interest px, the first range for the forced ON processing (step S107). Here, in the lookup table Tc of FIG. 7, the search range determination part 241 identifies the "forced ON filter" corresponding to the gamma-adjusted gradation of the pixel of interest px and determines the first range based on the identified filter number. The search range determination part 241 outputs the determined first range to the dot counting part 243. The dot counting part 243 counts the number of ON pixels within the first range in the error diffusion output D5 of the surrounding pixels stored in the three-value result storage section 242 (step S108). The dot counting part 243 outputs the count result to the determination section 244. The determination section 244 determines whether the count result is less than or equal to "0" (the first threshold value) (i.e., "0") (step S109). If it is determined that the count result is less than or equal to "0" ("YES" in step S109), the determination section 244 assigns "1" to the variable "JUDGE_ON" associated with the determination result of the forced ON processing, indicating that the forced ON processing is enabled (step S110). If it is determined that the count result is greater than or equal to "1" ("NO" in step S109), the determination section 244 assigns "0" to the variable "JUDGE_ON", indicating that the forced ON processing is disabled (step S111).

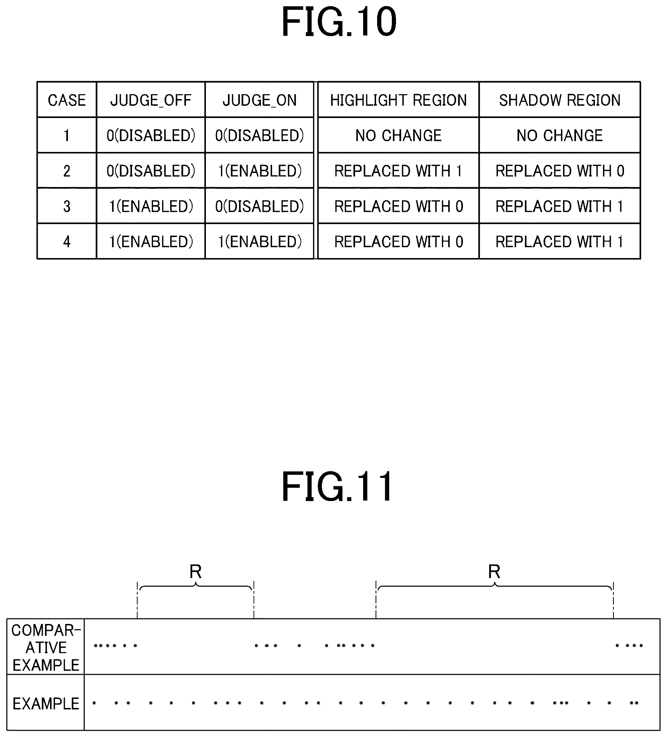

Upon completion of step S110 or S111, the forced change processing part 245 in FIG. 2 executes forced change processing based on the values of the variables "JUDGE_ON" and "JUDGE_OFF" (step S112). Specifically, in the forced change processing, the forced change processing part 245, based on the table shown in FIG. 10, either leaves the comparison result data D4 unchanged or replaces (changes) the comparison result data D4 with "0" or "1". Hereinafter, the case where both variables "JUDGE_OFF" and "JUDGE_ON" are "0 (disabled)" is referred to as "Case 1". The case where the variable "JUDGE_OFF" is "0 (disabled)" and the variable "JUDGE_ON" is "1 (enabled)" is referred to as "Case 2". The case where the variable "JUDGE_OFF" is "1 (enabled)" and the variable "JUDGE_ON" is "0 (disabled)" is referred to as "Case 3". The case where both the variables "JUDGE_OFF" and "JUDGE_ON" are "1 (enabled)" is referred to as "Case 4". In Case 1, regardless of whether the pixel of interest px is in the highlight region or the shadow region, the forced change processing part 245 does not change the comparison result data D4 (i.e., maintains its value) and directly outputs the comparison result data D4 as the error diffusion output D5. The processing in Case 1 corresponds to the "third processing" and the "maintaining processing". In Case 2, when the pixel of interest px is in the highlight region, the forced change processing part 245 replaces the comparison result data D4 with "1". When the pixel of interest px is in the shadow region, the forced change processing part 245 replaces the comparison result data D4 with "0". Then, the forced change processing part 245 sets the replacement result as the error diffusion output D5. The processing in Case 2 corresponds to the "first processing" and "forced ON processing". In Case 3, when the pixel of interest px is in the highlight region, the forced change processing part 245 replaces the comparison result data D4 with "0". When the pixel of interest px is in the shadow region, the forced change processing part 245 replaces the comparison result data D4 with "1". Then, the forced change processing part 245 sets the replacement result as the error diffusion output D5. The processing in Case 3 corresponds to the "second processing" and "forced OFF processing". The operation of the forced change processing part 245 in Case 4 is the same as that in Case 3. However, as described above, since the forced OFF processing and the forced ON processing do not conflict with each other, Case 4 does not actually occur. When step S112 in FIG. 9 is completed, the dot arrangement monitoring processing is completed.

FIG. 11 is a diagram illustrating the effect of the forced ON processing. The comparative example of FIG. 11 shows the result obtained by performing conventional error diffusion processing on input image data D2 containing a straight line having a line width of one dot and an intermediate gradation (corresponding to 64 gradations in an image with 256 gradations). In the regions R of FIG. 11, it can be seen that the straight line is broken. On the other hand, the example of FIG. 11 shows the result obtained by performing, on input image data D2 containing the same straight line, the error diffusion processing according to the present embodiment that includes the above-described forced OFF processing and forced ON processing. In the example, it can be seen that ON pixels are distributed at substantially equal intervals in the regions R, and breaks in the straight line are suppressed. This results from the following process. For a certain number of pixels of interest px after an ON pixel is last formed, the presence of that ON pixel within the first range disables the forced ON processing, preventing an ON pixel from being formed. Subsequently, when the ON pixel moves out of the first range, there are no longer any ON pixels in the first range. This enables the forced ON processing to form an ON pixel. This process repeats thereafter, resulting in ON pixels distributed at substantially equal intervals in the regions R.

### <Effects of First Embodiment>

As described above, in an image processing method according to the first embodiment, the controller 11 applies an error diffusion method to 1024-valued (M-valued) input image data D2 to output 3-valued (N-valued) output image data D6. When the value of a pixel of interest px in the input image data D2 is greater than 0 and less than 512 (a predetermined value), the controller 11 determines the value of a pixel of interest PX corresponding to the pixel of interest px in the output image data D6 to be "1" (a value other than 0) based on the values of the surrounding pixels around the pixel of interest PX in the first range. Accordingly, in error diffusion processing for a highlight region, when the number of ON pixels (pixels having a value of "1") in the first range is small, the forced ON processing can be executed to forcibly set the pixel of interest PX to an ON pixel. Consequently, in error diffusion processing of input image data D2 containing thin lines, line breaks are less likely to occur. Further, compared to conventional methods for adding noise to input image data D2, the deterioration of graininess can be suppressed.

In the image processing method, when the number of ON pixels (pixels having a value other than 0) among the surrounding pixels in the first range is less than or equal to "0" (the first threshold value), the controller 11 determines the value of the pixel of interest PX to be "1". This enables the execution of forced ON processing in situations where there are no ON pixels in the first range, where line breaks could potentially occur.

In addition, in the image processing method, the controller 11 determines the value of the pixel of interest PX to be "0" when the number of ON pixels among the surrounding pixels around the pixel of interest PX in the second range in the output image data D6 is greater than or equal to "1" (the second threshold value). Accordingly, when the second range has a proper density or higher corresponding to the value of the pixel of interest px, the forced OFF processing can be executed to prevent the generation of unnecessary ON pixels. Consequently, the graininess in solid portions and the like of the input image data D2 can be improved.

In the image processing method, when the value of the pixel of interest px in the input image data D2 is less than 1023 (maximum value) and is greater than or equal to 512 (predetermined value), the controller 11 determines the value of the pixel of interest PX corresponding to the pixel of interest px in the output image data D6 to be "0" based on the values of the surrounding pixels around the pixel of interest PX in the first range. Accordingly, in error diffusion processing for a shadow region, when the number of ON pixels (pixels having a value of "0") in the first range is small, the forced ON processing can be executed to forcibly set the pixel of interest PX to an ON pixel. Consequently, in error diffusion processing of input image data D2 containing thin lines, line breaks are less likely to occur. Further, compared to conventional methods for adding noise to input image data D2, the deterioration of graininess can be suppressed.

In the image processing method, when the number of ON pixels (pixels having a value of "0") among the surrounding pixels in the first range is less than or equal to "0" (the first threshold value), the controller 11 determines the value of the pixel of interest PX to be "0". This enables the execution of forced ON processing in situations where there are no ON pixels in the first range, where line breaks could potentially occur.

In addition, the controller 11 determines the value of the pixel of interest PX to be "1" (a value other than 0) when the number of ON pixels among the surrounding pixels around the pixel of interest PX in the second range in the output image data D6 is greater than or equal to "1" (the second threshold value). Accordingly, when the second range has a proper density or lower corresponding to the value of the pixel of interest px, the forced OFF processing can be executed to prevent the generation of unnecessary ON pixels. Consequently, the graininess in solid portions and the like of the input image data D2 can be improved.

In the image processing method, the controller 11 executes one of the forced ON processing (first processing), the forced OFF processing (second processing), and the maintaining processing (third processing). The forced ON processing is processing for determining the value of the pixel of interest PX corresponding to the pixel of interest px in the output image data D6 based on the value of the pixel of interest px in the input image data D2 and the values of the surrounding pixels around the pixel of interest PX in the first range. The forced OFF processing is processing for determining the value of the pixel of interest PX based on the value of the pixel of interest px in the input image data D2 and the values of the surrounding pixels around the pixel of interest PX in the second range in the output image data D6. The maintaining processing is processing for maintaining the value of the pixel of interest PX without executing the first processing or the second processing. Accordingly, in the error diffusion processing, it is possible to appropriately select, based on the pixel of interest px, whether to execute the forced ON processing or the forced OFF processing, or to execute neither processing. Therefore, depending on the values of the surrounding pixels around the pixel of interest PX, the pixel of interest PX can be forcibly set to an ON pixel to reduce line breaks, or the forced OFF processing can be executed to prevent the generation of unnecessary ON pixels, thereby improving graininess.

In the image processing method, when the value of the pixel of interest px in the input image data D2 is greater than 0 and less than 512, the controller 11 executes the forced ON processing and the forced OFF processing as follows. In the forced ON processing, the controller 11 determines the value of the pixel of interest PX to be "1" when the number of ON pixels among the surrounding pixels in the first range is "0" or less. In the forced OFF processing, the controller 11 determines the value of the pixel of interest PX to be "0" when the number of ON pixels among the surrounding pixels in the second range is "1" or more. This enables the forced ON processing to be executed when the first range is in a situation where line breaks could potentially occur due to the value of the pixel of interest px. In addition, when the second range has a proper density or higher corresponding to the value of the pixel of interest px, the forced OFF processing can be executed to prevent the generation of unnecessary ON pixels.

In the image processing method, when the value of the pixel of interest px in the input image data D2 is less than 1023 and greater than or equal to 512, the controller 11 executes the forced ON processing and the forced OFF processing as follows. In the forced ON processing, the controller 11 determines the value of the pixel of interest PX to be "0" when the number of ON pixels among the surrounding pixels in the first range is "0" or less. In the forced OFF processing, the controller 11 determines the value of the pixel of interest PX to be "1" when the number of ON pixels among the surrounding pixels in the second range is "1" or more. This enables the forced ON processing to be executed when the first range is in a situation where line breaks could potentially occur due to the value of the pixel of interest px. In addition, when the second range has a proper density or lower corresponding to the value of the pixel of interest px, the forced OFF processing can be executed to prevent the generation of unnecessary ON pixels.

In the image processing method, the controller 11 determines the size of the first range based on the value of the pixel of interest px in the input image data D2. This makes it possible to appropriately determine whether the forced ON processing is necessary while fixing the first threshold value at "0".

In addition, the first range has a circular shape centered on the pixel of interest PX. This makes it possible to appropriately determine whether the forced ON processing is necessary by simply counting ON pixels, regardless of the angle of any lines contained in the input image data D2.

In the image processing method, the controller 11 determines the size of the first range and the size of the second range based on the value of the pixel of interest px in the input image data D2. This makes it possible to appropriately determine whether the forced ON processing is necessary while fixing the first threshold value at "0". This also makes it possible to appropriately determine whether the forced OFF processing is necessary while fixing the second threshold value at "1".

For a given pixel of interest px, the area of the first range is greater than the area of the second range. By employing this large-area first range, it is possible to appropriately determine whether breaks in thin lines may occur.

In addition, the first range has a circular shape centered on the pixel of interest PX. In addition, the number of pixels contained in the second range selected for a given pixel of interest px is equal to the number of pixels corresponding to the radius of the first range selected for that pixel of interest px. This enables the forced ON processing and the forced OFF processing to be executed under appropriate conditions for their respective purposes.

The image processing apparatus 1 according to the first embodiment includes the controller 11 that executes the above-described image processing method. In addition, the program 121 according to the first embodiment causes the controller 11 to execute the processing related to the above-described image processing method. These features make it less likely for thin lines to break in error diffusion processing while suppressing the deterioration of graininess.

### (Second Embodiment)

Next, a second embodiment will be described. Hereinafter, differences from the first embodiment will be described, and description of points common to the first embodiment will be omitted.

In the forced OFF processing of the first embodiment, the second threshold value is fixed at "1", and the size of the second range is determined based on the value of the pixel of interest px. In contrast, in the forced OFF processing of the second embodiment, the search range for ON pixels (the second range) is fixed to the entire target range 30 (a predetermined range), and the second threshold value is determined based on the value of the pixel of interest px. Then, the forced OFF processing is executed when the number of ON pixels in the target range 30 is greater than or equal to the second threshold value.

In the forced ON processing of the first embodiment, the first threshold value is fixed at "0", and the size of the first range is determined based on the value of the pixel of interest px. In contrast, in the forced ON processing of the second embodiment, the search range for ON pixels (the first range) is fixed to the entire target range 30 (a predetermined range), and the first threshold value is determined based on the value of the pixel of interest px. Then, the forced ON processing is executed when the number of ON pixels in the target range 30 is less than or equal to the first threshold value.

The second embodiment also provides the same effects as the first embodiment (e.g., FIG. 11).

### <Lookup Table Td for Forced OFF Processing>

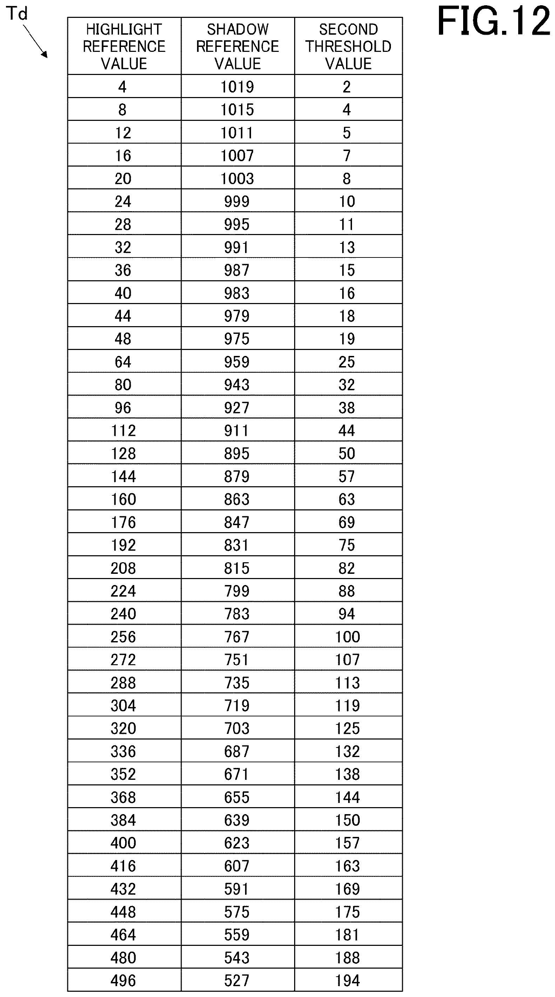

FIG. 12 is a diagram illustrating a lookup table Td used to determine the second threshold value in the forced OFF processing according to the second embodiment. The "second threshold value" in the lookup table Td is set such that, when the value of the pixel of interest px is the "highlight reference value" or the "shadow reference value", the "second threshold value" is the appropriate number of ON pixels contained among 399 pixels of the target range 30 (the region up to filter number "30") in FIG. 4. For example, when the value of the pixel of interest px is "64", the appropriate number of ON pixels (pixels having a value of "1" or "2") in the target range 30 is 399 × (64/1023) = 25. Therefore, the "second threshold value" corresponding to the "highlight reference value" of "64" is set to "25". When 25 of 399 pixels in the target range 30 are ON pixels, the density is appropriate. When there are 25 or more ON pixels excluding the pixel of interest px, increasing the number of ON pixels further causes the density to deviate from the appropriate density for the value of the pixel of interest px. Therefore, the forced OFF processing is executed. On the other hand, in the shadow region, pixels having a value of "0" are counted as ON pixels. In FIG. 12, the "highlight reference value" and the "shadow reference value" are thinned out, but the second threshold value may also be set for these intermediate reference values. The lookup table Td shown in FIG. 12 is an example. For example, to provide a margin, the "second threshold value" may be set larger than that in FIG. 12. The reason is the same as the reason for providing a margin in FIG. 5.

### <Lookup Table Te for Forced ON Processing>

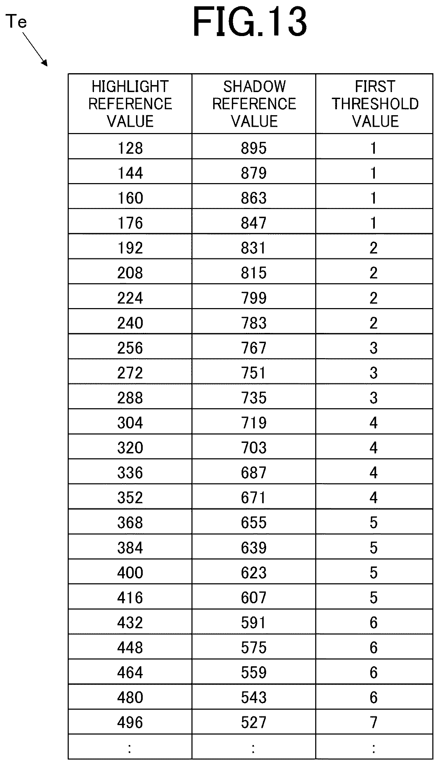

FIG. 13 is a diagram illustrating a lookup table Te used to determine the first threshold value in the forced ON processing according to the second embodiment. The "first threshold value" in the lookup table Te is set based on the premise that a line having a width of one dot is present in the target range 30 and the pixel of interest PX. Specifically, the "first threshold value" is set such that, when the value of the pixel of interest px is the "highlight reference value" or the "shadow reference value", the "first threshold value" is the appropriate number of ON pixels within a radius of 17 pixels of the target range 30. For example, when the value of the pixel of interest px is "256", the appropriate number of ON pixels (pixels having a value of "1" or "2") within a radius of 17 pixels of the target range 30 is 17/(1023/256)=4.25. Accordingly, the appropriate density is achieved when there are four ON pixels, including the pixel of interest PX, among the 17 pixels. The "first threshold value" is set to "3", excluding the pixel of interest PX. Therefore, the forced ON processing is executed when the number of ON pixels within the target range 30, excluding the pixel of interest PX, is three or less. On the other hand, in the shadow region, pixels having a value of "0" are counted as ON pixels. In FIG. 13, the "highlight reference value" and the "shadow reference value" are thinned out, but the first threshold value may also be set for these intermediate reference values. The lookup table Te shown in FIG. 13 is an example. For example, to provide a margin, the "first threshold value" may be set smaller than that in FIG. 13. The reason is the same as the reason for providing a margin in FIG. 6.

In the forced ON processing, the search range at low densities becomes enormous. Therefore, when the search range is fixed to the target range 30, it is practical to exclude relatively low densities from the correction target. In addition, the forced ON processing may be omitted in a density range in which no line breaks occur. In the lookup table Te shown in FIG. 13, when the "highlight reference value" is less than "128", the forced ON processing is not executed. In addition, for example, since no line breaks occur at high densities where, for example, one pixel in every two pixels is an ON pixel, the forced ON processing may be omitted in the range in which the "highlight reference value" and the "shadow reference value" are around 512.

The lookup tables Td and Te shown in FIGS. 12 and 13 have an advantage over the lookup tables Ta and Tb shown in FIGS. 5 and 6 in that the circuit and processing can be further simplified because the search range is fixed.

### <Lookup Table Tf for Determining Filter Number>

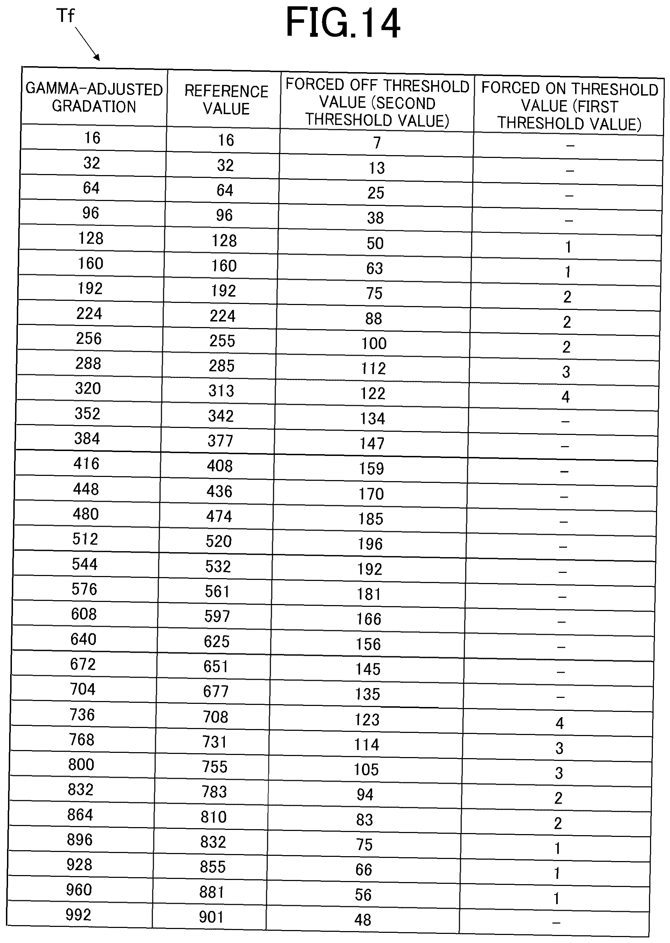

In the actual forced OFF processing and forced ON processing, a lookup table Tf shown in FIG. 14 is used instead of the lookup tables Td and Te shown in FIGS. 12 and 13. The lookup tables Td to Tf are generated in advance and stored in the storage section 12. The lookup table Tf corresponds to a reorganized version of the lookup tables Td and Te shown in FIGS. 12 and 13 such that a filter number can be determined from the value of the pixel of interest px after gamma adjustment. The "gamma-adjusted gradation" and the "reference value" are the same as those in FIG. 7. In FIG. 14, the "gamma-adjusted gradation" is shown in 16-gradation increments. However, in reality, intermediate data between these values also exists. In FIG. 14, the correspondence between the "reference value" and a "forced OFF threshold value (second threshold value)" is derived from the correspondence between the "highlight reference value" or "shadow reference value" and the "second threshold value" in the lookup table Td of FIG. 12. The correspondence between the "reference value" and a "forced ON threshold value (first threshold value)" is derived from the correspondence between the "highlight reference value" or "shadow reference value" and the "first threshold value" in the lookup table Te of FIG. 13. For gamma-adjusted gradations where the "forced ON threshold value" is "-" in FIG. 14, the forced ON processing is not executed. For gamma-adjusted gradations of 96 or less and 992 or more, since the target range 30 cannot reproduce the proper density, the forced ON processing is not executed. For gamma-adjusted gradations between 352 and 704, since line breaks are less likely to occur at these densities, the forced ON processing is not executed.

### <Operation of Dot Arrangement Monitoring Section>

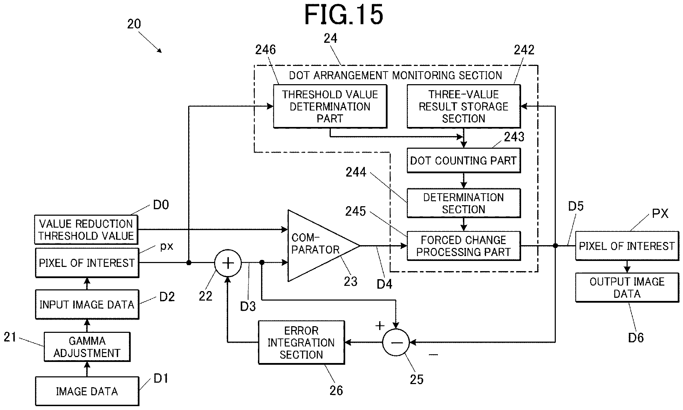

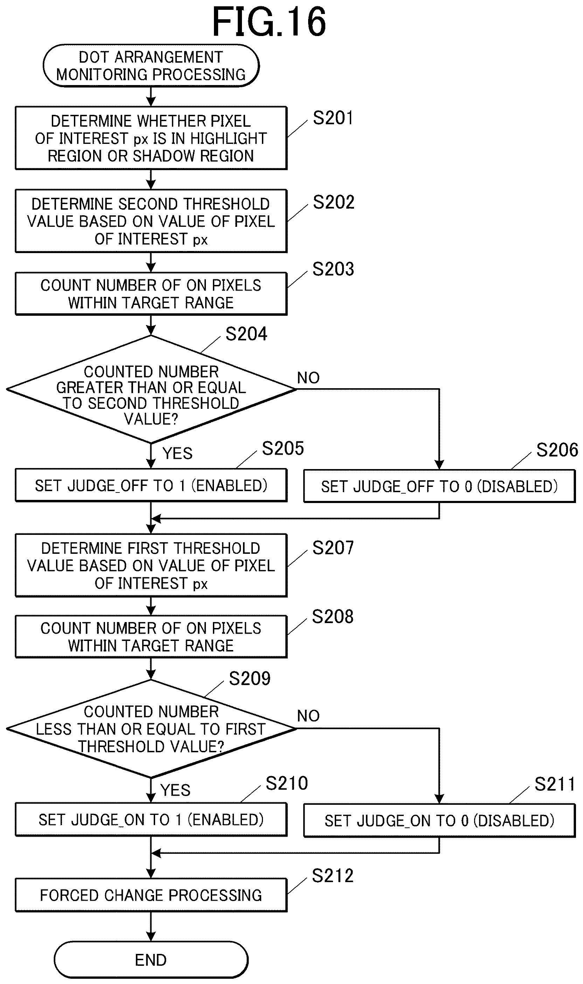

FIG. 15 is a functional block diagram of an error diffusion processing section 20 according to the second embodiment. The error diffusion processing section 20 of the second embodiment corresponds to the error diffusion processing section 20 of the first embodiment shown in FIG. 2, with the search range determination part 241 replaced by a threshold value determination part 246. Dot arrangement monitoring processing according to the second embodiment will be described with reference to the block diagram of FIG. 15 and the flowchart of FIG. 16. Differences from the flowchart in FIG. 9 will be described below.

When the dot arrangement monitoring processing is started, as illustrated in FIG. 15, the value of a pixel of interest px is input to the threshold value determination part 246 of the dot arrangement monitoring section 24. The threshold value determination part 246 determines, based on the value of the pixel of interest px, whether the pixel of interest px is in the highlight region or the shadow region (step S201). The threshold value determination part 246 determines, based on the value of the pixel of interest px, the second threshold value for the forced OFF processing (step S202). Here, in the lookup table Tf of FIG. 14, the threshold value determination part 246 determines the "forced OFF threshold value" corresponding to the gamma-adjusted gradation of the pixel of interest px as the second threshold value. The threshold value determination part 246 outputs the determined second threshold value to the dot counting part 243. The dot counting part 243 counts the number of ON pixels within the target range 30 in the error diffusion output D5 of the surrounding pixels stored in the three-value result storage section 242 (step S203). The determination section 244 determines whether the count result is greater than or equal to the second threshold value (step S204). If it is determined that the count result is greater than or equal to the second threshold value ("YES" in step S204), the determination section 244 assigns "1" to the variable "JUDGE_OFF" (step S205). If it is determined that the count result is less than the second threshold value ("NO" in step S204), the determination section 244 assigns "0" to the variable "JUDGE_OFF" (step S206).

Upon completion of step S205 or S206, the threshold value determination part 246 determines, based on the value of the pixel of interest px, the first threshold value for the forced ON processing (step S207). Here, in the lookup table Tf of FIG. 14, the threshold value determination part 246 determines the "forced ON threshold value" corresponding to the gamma-adjusted gradation of the pixel of interest px as the first threshold value. The threshold value determination part 246 outputs the determined first threshold value to the dot counting part 243. The dot counting part 243 counts the number of ON pixels within the target range 30 in the error diffusion output D5 of the surrounding pixels stored in the three-value result storage section 242 (step S208). The determination section 244 determines whether the count result is less than or equal to the first threshold value (step S209). If it is determined that the count result is less than or equal to the first threshold value ("YES" in step S209), the determination section 244 assigns "1" to the variable "JUDGE_ON" (step S210). If it is determined that the count result is greater than the first threshold value ("NO" in step S209), the determination section 244 assigns "0" to the variable "JUDGE_ON" (step S211). Upon completion of step S210 or step S211, the forced change processing part 245 executes the forced change processing (step S212). The processing in step S212 is the same as that in step S112 in FIG. 9. When step S212 is completed, the dot arrangement monitoring processing is completed.

### <Effects of Second Embodiment>

As described above, in an image processing method according to the second embodiment, the controller 11 executes one of the forced ON processing (first processing), the forced OFF processing (second processing), and the maintaining processing (third processing). The forced ON processing is processing for determining the value of a pixel of interest PX corresponding to a pixel of interest px in the output image data D6 based on the value of the pixel of interest px in the input image data D2 and the values of the surrounding pixels around the pixel of interest PX in the target range 30 (predetermined range). The forced OFF processing is processing for determining the value of the pixel of interest PX based on the value of the pixel of interest px and the values of the surrounding pixels in the target range 30. The maintaining processing is processing for maintaining the value of the pixel of interest PX without executing the first processing or the second processing. Accordingly, in the error diffusion processing, it is possible to appropriately select, based on the pixel of interest px, whether to execute the forced ON processing or the forced OFF processing, or to execute neither processing, while keeping the search range fixed to the target range 30. Consequently, compared to the first embodiment, the processing load on the controller 11 can be reduced and the processing time can be shortened.

In the image processing method, when the value of the pixel of interest px in the input image data D2 is greater than 0 and less than 512, the controller 11 executes the forced ON processing and the forced OFF processing as follows. In the forced ON processing, the controller 11 determines the value of the pixel of interest PX to be "1" when the number of ON pixels among the surrounding pixels in the target range 30 is less than or equal to the first threshold value. In the forced OFF processing, the controller 11 determines the value of the pixel of interest PX to be "0" when the number of ON pixels among the surrounding pixels in the target range 30 is greater than or equal to the second threshold value. This enables the forced ON processing to be executed when the first range is in a situation where line breaks could potentially occur due to the value of the pixel of interest px. In addition, when the second range has a proper density or higher corresponding to the value of the pixel of interest px, the forced OFF processing can be executed to prevent the generation of unnecessary ON pixels.

In the image processing method, when the value of the pixel of interest px in the input image data D2 is less than 1023 and greater than or equal to 512, the controller 11 executes the forced ON processing and the forced OFF processing as follows. In the forced ON processing, the controller 11 determines the value of the pixel of interest PX to be "0" when the number of ON pixels among the surrounding pixels in the target range 30 is less than or equal to the first threshold value. In the forced OFF processing, the controller 11 determines the value of the pixel of interest PX to be "1" when the number of ON pixels among the surrounding pixels in the target range 30 is greater than or equal to the second threshold value. This enables the forced ON processing to be executed when the first range is in a situation where line breaks could potentially occur due to the value of the pixel of interest px. In addition, when the second range has a proper density or lower corresponding to the value of the pixel of interest px, the forced OFF processing can be executed to prevent the generation of unnecessary ON pixels.

In the image processing method, the controller 11 determines the first threshold value and the second threshold value based on the value of the pixel of interest px. This makes it possible to appropriately determine whether the forced ON processing is necessary while fixing the first range to the target range 30. This also makes it possible to appropriately determine whether the forced OFF processing is necessary while fixing the second range to the target range 30.

An image processing apparatus 1 according to the second embodiment includes the controller 11 that executes the above-described image processing method. In addition, a program 121 according to the second embodiment causes the controller 11 to execute the processing related to the above-described image processing method. These features make it less likely for thin lines to break in error diffusion processing while suppressing the deterioration of graininess.

Note that the present disclosure is not limited to the above embodiments, and various modifications are possible. For example, in the above-described embodiments, either the forced ON processing (first processing), the forced OFF processing (second processing), or the maintaining processing (third processing) is executed for each pixel of interest px. However, the present disclosure is not limited thereto. For each pixel of interest px, the forced OFF processing (second processing) may be omitted, and either the forced ON processing (first processing) or the maintaining processing (third processing) may be executed.

In the forced ON processing, an example of determining the error diffusion output D5 to be "1" has been described as an example of determining the error diffusion output D5 to be "a value other than 0". However, the present disclosure is not limited thereto. For example, "a value other than 0" may be any integer greater than zero.

In addition, the shape of the target range 30 and the shape of the search range (the first range and the second range) determined by each filter number are not limited to a circular shape or a semicircular shape and may be a rectangular shape or the like.

Although some embodiments of the present disclosure have been described, the scope of the present disclosure is not limited to the above-described embodiments and includes the scope of the invention set forth in the claims and equivalents thereof.

Although embodiments of the present invention have been described and illustrated in detail, the disclosed embodiments are made for purposes of illustration and example only and not limitation. The scope of the present invention should be interpreted in accordance with the terms of the appended claims.

## Claims

1. An image processing method comprising
applying an error diffusion method to M-valued input image data to output N-valued output image data, with N < M, wherein,
when a value of a pixel of interest in the input image data is greater than zero and less than a predetermined value, the method further comprises determining a value of a corresponding pixel of interest corresponding to the pixel of interest in the output image data to be a value other than zero based on a value of a surrounding pixel around the corresponding pixel of interest in a first range.

2. The image processing method according to claim 1, wherein, when a number of a pixel having a value other than zero among the surrounding pixel in the first range is less than or equal to a predetermined first threshold value, the determining includes determining the value of the corresponding pixel of interest to be the value other than zero.

3. The image processing method according to claim 2, wherein, when a number of a pixel having a value other than zero among a surrounding pixel around the corresponding pixel of interest in a second range in the output image data is greater than or equal to a second threshold value that is greater than the first threshold value, the method further includes determining the value of the corresponding pixel of interest to be zero.

4. An image processing method comprising
applying an error diffusion method to M-valued input image data to output N-valued output image data, with N < M, wherein,
when a value of a pixel of interest in the input image data is less than a maximum value and is greater than or equal to a predetermined value, the method further comprises determining a value of a corresponding pixel of interest corresponding to the pixel of interest in the output image data to be zero based on a value of a surrounding pixel around the corresponding pixel of interest in a first range.

5. The image processing method according to claim 4, wherein, when a number of a pixel having a value of zero among the surrounding pixel in the first range is less than or equal to a predetermined first threshold value, the determining includes determining the value of the corresponding pixel of interest to be zero.

6. The image processing method according to claim 5, wherein, when a number of a pixel having a value of zero among a surrounding pixel around the corresponding pixel of interest in a second range in the output image data is greater than or equal to a second threshold value that is greater than the first threshold value, the method further includes determining the value of the corresponding pixel of interest to be a value other than zero.

7. An image processing method comprising
applying an error diffusion method to M-valued input image data to output N-valued output image data, with N < M, wherein the method further comprises executing one of:
first processing of determining, based on a value of a pixel of interest in the input image data and a value of a surrounding pixel around a corresponding pixel of interest in a first range in the output image data, a value of the corresponding pixel of interest corresponding to the pixel of interest in the output image data;
second processing of determining the value of the corresponding pixel of interest based on the value of the pixel of interest in the input image data and a value of a surrounding pixel around the corresponding pixel of interest in a second range in the output image data; and
third processing of maintaining the value of the corresponding pixel of interest without executing the first processing or the second processing.

8. The image processing method according to claim 7, wherein, when the value of the pixel of interest in the input image data is greater than zero and less than a predetermined value:
the first processing includes determining the value of the corresponding pixel of interest to be a value other than zero when a number of a pixel having a value other than zero among the surrounding pixel in the first range is less than or equal to a predetermined first threshold value; and
the second processing includes determining the value of the corresponding pixel of interest to be zero when a number of a pixel having a value other than zero among the surrounding pixel in the second range is greater than or equal to a second threshold value that is greater than the first threshold value.

9. The image processing method according to claim 7, wherein, when the value of the pixel of interest in the input image data is less than a maximum value and greater than or equal to a predetermined value:
the first processing includes determining the value of the corresponding pixel of interest to be zero when a number of a pixel having a value of zero among the surrounding pixel in the first range is less than or equal to a predetermined first threshold value; and
the second processing includes determining the value of the corresponding pixel of interest to be a value other than zero when a number of a pixel having a value of zero among the surrounding pixel in the second range is greater than or equal to a second threshold value that is greater than the first threshold value.

10. An image processing method comprising
applying an error diffusion method to M-valued input image data to output N-valued output image data, with N < M, wherein the method further comprises executing one of:
first processing of determining, based on a value of a pixel of interest in the input image data and a value of a surrounding pixel around a corresponding pixel of interest in a predetermined range in the output image data, a value of the corresponding pixel of interest corresponding to the pixel of interest in the output image data;
second processing of determining the value of the corresponding pixel of interest based on the value of the pixel of interest and the value of the surrounding pixel in the predetermined range; and
third processing of maintaining the value of the corresponding pixel of interest without executing the first processing or the second processing.

11. The image processing method according to claim 10, wherein, when the value of the pixel of interest in the input image data is greater than zero and less than a predetermined value:
the first processing includes determining the value of the corresponding pixel of interest to be a value other than zero when a number of a pixel having a value other than zero among the surrounding pixel in the predetermined range is less than or equal to a predetermined first threshold value; and
the second processing includes determining the value of the corresponding pixel of interest to be zero when the number of the pixel having the value other than zero among the surrounding pixel in the predetermined range is greater than or equal to a second threshold value that is greater than the first threshold value.

12. An image processing apparatus (1) comprising
a controller (11), wherein
the controller (11):
applies an error diffusion method to M-valued input image data to output N-valued output image data, with N < M; and,
when a value of a pixel of interest in the input image data is greater than zero and less than a predetermined value, determines a value of a corresponding pixel of interest corresponding to the pixel of interest in the output image data to be a value other than zero based on a value of a surrounding pixel around the corresponding pixel of interest in a first range.

13. An image processing apparatus (1) comprising
a controller (11), wherein
the controller (11):
applies an error diffusion method to M-valued input image data to output N-valued output image data, with N < M; and,
when a value of a pixel of interest in the input image data is less than a maximum value and is greater than or equal to a predetermined value, determines a value of a corresponding pixel of interest corresponding to the pixel of interest in the output image data to be zero based on a value of a surrounding pixel around the corresponding pixel of interest in a first range.

14. A program (121) causing a computer to execute:
a process of applying an error diffusion method to M-valued input image data to output N-valued output image data, with N < M; and,
when a value of a pixel of interest in the input image data is greater than zero and less than a predetermined value, a process of determining a value of a corresponding pixel of interest corresponding to the pixel of interest in the output image data to be a value other than zero based on a value of a surrounding pixel around the corresponding pixel of interest in a first range.

15. A program (121) causing a computer to execute:
a process of applying an error diffusion method to M-valued input image data to output N-valued output image data, with N < M; and,
when a value of a pixel of interest in the input image data is less than a maximum value and is greater than or equal to a predetermined value, a process of determining a value of a corresponding pixel of interest corresponding to the pixel of interest in the output image data to be zero based on a value of a surrounding pixel around the corresponding pixel of interest in a first range.
